# EUROPEAN PATENT SPECIFICATION

(11) **EP 2 543 288 B1**
(45) Date of publication and mention of the grant of the patent: **07.05.2014**
(21) Application number: 11172912.5
(22) Date of filing: 06.07.2011
(51) Int. Cl.: A47J 31/18, A47J 27/21

(54) **Double receptacle fully automated tea machine**
Vollautomatische Teemaschine mit doppeltem Behälter
Machine à thé automatique complète à double réceptacle

(43) Date of publication of application: 09.01.2013
(73) Proprietor: Eksen Makine Sanayi ve Ticaret A.S., 41480 Kocaeli (TR)
(72) Inventor: Tahincioglu, Besim, 41480 Kocaeli (TR); Kutlay, Engin, 41480 Kocaeli (TR); Tuzcu, Oytun, 41480 Kocaeli (TR)
(74) Representative: Sevinç, Erkan

(56) References cited:
- EP-A1- 0 292 649
- EP-A1- 1 808 110
- EP-A1- 2 005 865
- EP-A2- 2 103 234
- GB-A- 189 801 782

## Description

### Technical Field of the Invention

The present invention relates to a tea preparing apparatus and more particularly a double receptacle automatic tea machine.

### Background of the Invention

Tea is traditionally consumed on a daily basis in large quantities in the country of the applicant. A good flavor tea is believed to be prepared by way of boiling water in a first receptacle and steeping tea leaves in hot water in a second receptacle.

A common problem of automated tea preparing machines is that they provide only a limited automation by which water is boiled in a first receptacle and then kept warm therein as long as preferred to allow brewing of tea leaves in a second top receptacle. Therefore, to complete brewing, the user himself must add water to the top receptacle from the boiling receptacle; which means a step which is merely user dependant to the extent that in the absence of user intervention, the whole tea preparing process is aborted is in question.

Nevertheless, it is observed that tea consumers are not reluctant to involve in the tea preparing process and yet prefer such "half-automated" tea preparing machines to conventional non-electrical tea preparing methods. A fully automated tea preparing apparatus having a reasonable price tag and which can transfer boiled water to the top receptacle where dry tea leaves lie is yet believed to be a major step toward consumer satisfaction.

The present invention provides a fully automated tea machine having a water transfer means whose activation occurs only under certain conditions. To this end, in the absence of a teapot appropriately positioned on the lower receptacle no water transfer will be effected. On the other hand, in the case means for detecting appropriate positioning of said teapot malfunctions for whatever reason, a second security measure is provided such that fluid communication between a lower receptacle conduit and respective teapot conduit is closed. To this end a more reliable product is achieved, which prevents unwanted hazards such as burns either due to the fact that means for detecting appropriate positioning of said teapot is dysfunctional, said upper receptacle is not correctly placed or even it is removed during water transfer taking place.

A prior art document in the technical field of the present invention can be referred to as EP 2 103 234, disclosing a machine having a tea preparing pot for automatic water spraying process over tea leaves, and for preparing tea. A two-way valve provides sealing between edges of the pot against scalding during discharging of the pot. A one-way valve controls reversal flow of water into the tea preparing pot, and a water effuser is provided at a tea strainer for uniform over spraying of the tea leaves with the water. A weight is exerted on the two-way valve, so that an outer part of the two-way valve is completely pressed downwardly.

### Objects of the Invention

Primary object of the present invention is to provide an electrical tea machine which is fully automated to the extent that it can carry out both boiling and brewing operations without user intervention being necessitated.

Another object of the present invention is to provide a fully automated tea machine which can reliably interrupt transfer of boiled water from the lower receptacle to the upper receptacle in cases where means for detecting appropriate positioning of upper receptacle is dysfunctional, said upper receptacle is not correctly placed or it is removed during water transfer taking place.

Another object of the present invention is to provide a fully automated tea machine which prevents unwanted hazards such as burns during automatic water transfer.

### Summary of the Invention

The present invention proposes a domestic appliance and specifically a tea machine having a first receptacle for boiling water and a second receptacle containing plant leaves to be brewed. Said second receptacle is conventionally placed on top of said first receptacle.

The electrical household appliance of the invention comprises a first receptacle for boiling water and a second receptacle suitable for placing on top of said first receptacle such that plant leaves are placed therein to be brewed in heated water.

Prior to effecting transfer of boiled water from the lower receptacle to the upper receptacle, whether said upper receptacle is appropriately positioned on the lower receptacle is detected by a means for detecting positioning of said upper receptacle. On the other hand, in the case said means for detecting positioning of said upper receptacle fails, said first receptacle comprises a bidirectional valve selectively establishing fluid communication with said second receptacle in response to presence of a pusher mechanism of said first receptacle in engaging relationship with said bidirectional valve.

### Brief Description of the Figures

Accompanying drawings are given solely for the purpose of exemplifying a fully automated tea machine whose advantages over prior art were outlined above and will be explained in detail hereinafter:
Fig. 1 demonstrates a perspective front view of the tea apparatus according to the present invention.

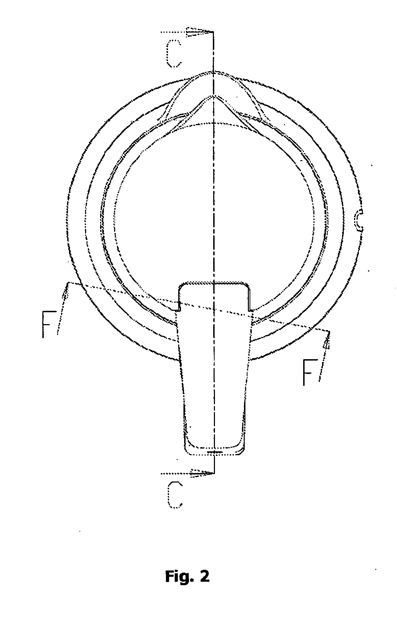

Fig. 2 demonstrates a top view of the tea apparatus according to the present invention.

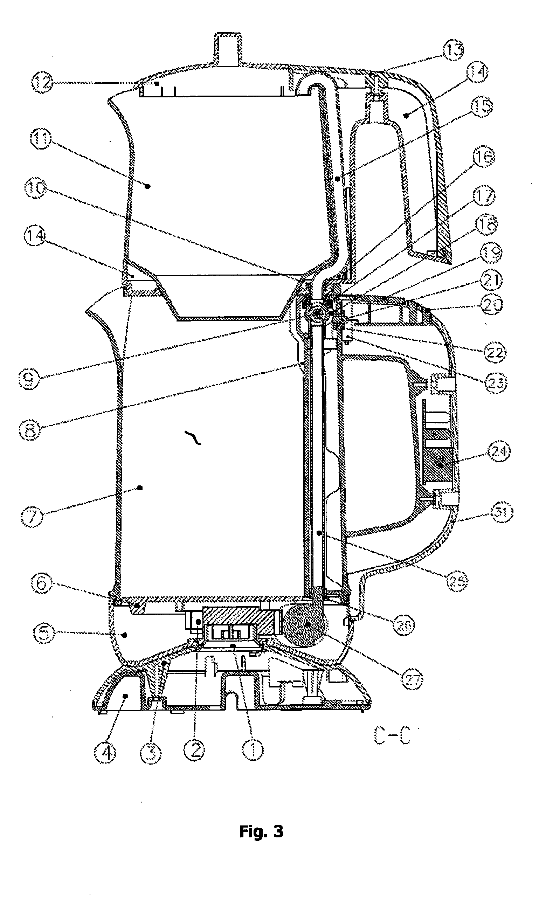

Fig. 3 demonstrates a cross-sectional view of the tea apparatus according to the present invention along the C-C cross-section of Fig. 2.

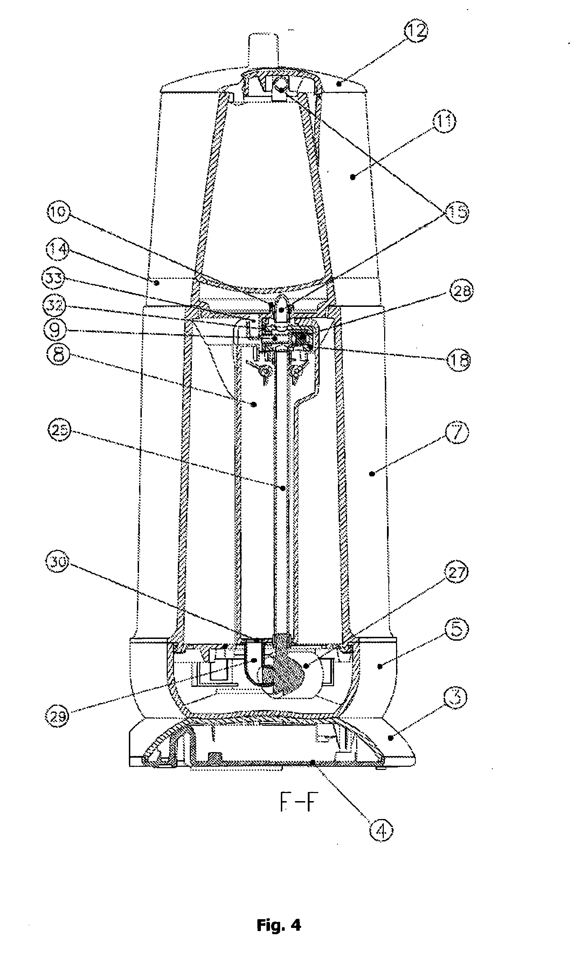

Fig. 4 demonstrates a cross-sectional view of the tea apparatus according to the present invention along the F-F cross-section of Fig. 2.

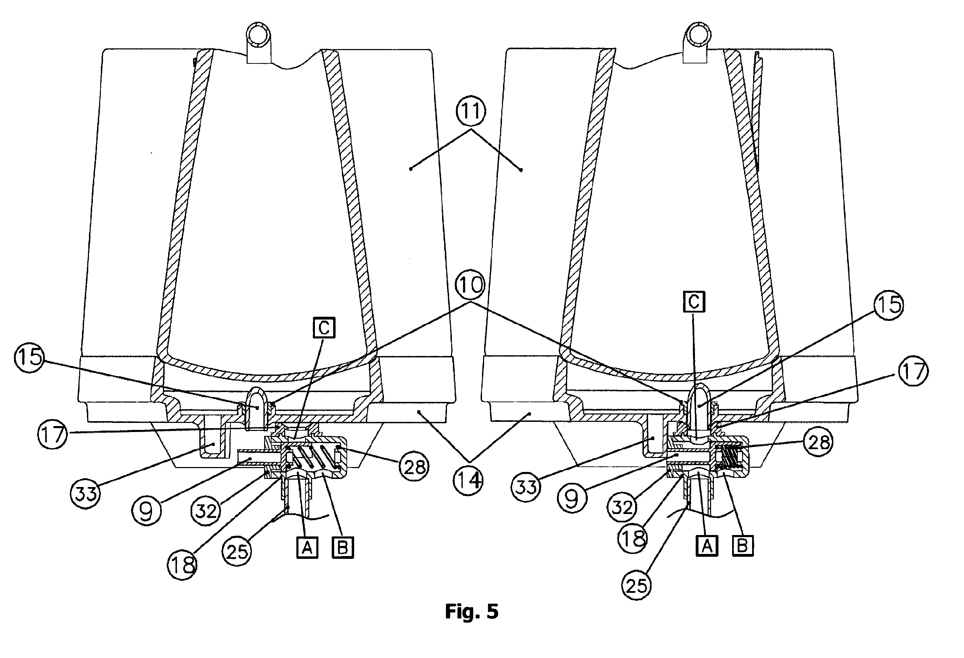

Fig. 5 demonstrates a cross-sectional view of the bidirectional valve according to the present invention with respectively open and closed fluid communication A-C.

### Detailed Description of the Invention

Referring now to the figures outlined above, the present invention proposes an electrical household appliance for preparing tea in a traditional manner, i.e. by way of using separate boiling and brewing receptacles (respectively 7 and 11). The appliance comprises a first receptacle (7) for boiling water prior to brewing and a second receptacle (11) in which tea leaves are placed and brewed in hot water accordingly. Said second receptacle has a lid (12) and a handle (13) with an inner part (14).

Both receptacles (7, 11) are put one above another to allow thermal communication and heat energy radiated from a heat source in communication with said first receptacle (7) also reach said second receptacle (11). The base of said second receptacle (11) therefore covers the open upper end of said first receptacle (7) in a conventional manner.

The heating arrangement of the tea preparation apparatus comprises an electrical heating means (6) in the form of an electrical ohmic resistance. The base (4) of the lower receptacle (7) comprises a lateral cover (3) on which said lower receptacle's (7) lower end (5) is seated. The tea machine conventionally comprises a plurality of gaskets (10, 17, 22, 26 and 29).

As is generally practiced in the available art, power transfer to said heat source can be lowered upon boiling. Temperature in the lower receptacle may be controlled by means of a plurality of control sensors. The preferred embodiment of the present invention features an NTC steam sensor (21) as delineated later on.

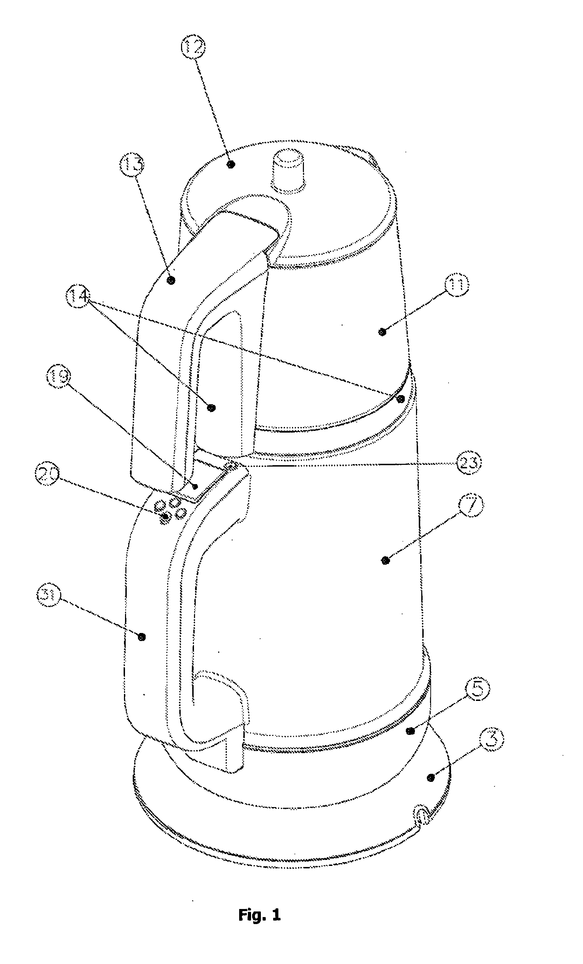

Referring to Fig. 1, the lower receptacle (7) according to the present invention comprises a handle (31) joined to said lower receptacle (7) body. The upper receptacle (11) comprises a lid (12) and a handle (12). The lower receptacle (7) according to the present invention is connected to an electrical heater base (5), said base (5) comprising an electrical connector (1) associated with an electrical adaptor (2).

The tea preparing apparatus according to the invention comprises an electronic control unit (24) allowing a user to start the apparatus manually or automatically at a specified time. The boiling receptacle (7) should be filled with water prior to switching the apparatus on. Automatic transfer of boiled water will be initiated only if the fluid communication from the lower receptacle (7) to the upper receptacle (11) is established as explained below.

The upper receptacle (11) according to the present invention comprises a magnet (16) proper alignment of which is detected by a magnetic sensor (23) on said lower receptacle (7). Said magnetic sensor (23) ensures that fluid communication from the lower receptacle (7) to the upper receptacle (11) is established and transfer of boiled water can be carried out in safety. In other words, no initiation signal will be sent to a transfer means (27), i.e. to a pump by said electronic control unit (24) as long as said magnetic sensor (23) does not detect proper alignment of said magnet (16).

When said upper receptacle (11) is appropriately positioned on top of said lower receptacle (7), a fluid communication (A-C) is established between a boiler evacuation conduit (25) and an intake orifice of a teapot (11) conduit (15). Said teapot (11) conduit (15) therefore provides that boiled water is poured out of its vent down, on top of tea leaves lying on the ground of the receptacle (11).

In the absence of the teapot (11) appropriately positioned with its magnet (16) on the lower receptacle (7), no water transfer will be effected. On the other hand, in the case that said magnetic sensor (23) fails to ensure proper positioning of the upper receptacle (11) for whatever reason, a second security measure is provided by a valve pusher mechanism (33) of the teapot (11). Said pusher mechanism (33) at its correct position, advances a movable valve extension (9) against a valve extension spring (28) in a valve body (18) within a valve slot (8), therefore allowing fluid communication (A-C) between said boiler evacuation conduit (25) and said teapot (11) conduit (15).

In the event that the bidirectional valve (18) does not take its water transfer position either because said magnetic sensor (23) is dysfunctional, said upper receptacle (7) is not correctly placed or even removed during water transfer taking place, fluid communication between said boiler evacuation conduit (25) and said teapot (11) conduit (15) is closed as said valve extension (9) is displaced to its original position by said valve extension spring (28). Said valve extension (9) being freely pushed by said spring (28) while closing fluid communication (A-C) between the receptacles (7, 11), provides that boiled water rising in said evacuation conduit (5) is conveyed from said conduit's (25) upper end back (A-B) to the lower receptacle (7) passing through said spring (28).

The initiation of said transfer means (27) motor allowing transfer of boiled water to said teapot (15) is controlled by said steam sensor (21) whose resistance decreases in response to temperature rise.

In a nutshell, the present invention proposes an electrical household appliance comprising a first receptacle (7) for boiling water and a second receptacle (11) in thermal communication with said first receptacle (7) and in which plant leaves are placed in heated water for brewing. Said second receptacle (11) is also suitable for placing on top of said first receptacle (7) such that the base of said second receptacle (11) cover the upper open end of said first receptacle (7). Said first receptacle (7) comprises a bidirectional valve (18) selectively establishing fluid communication with said second receptacle (11) in response to presence of a pusher mechanism (33) of said second receptacle (11) in engaging relationship with said bidirectional valve (18). Said first receptacle (7) further comprises a boiler evacuation conduit (25) in communication with said lower receptacle (19).

Upon boiling, the electronic control unit (24) does not immediately start transfer operation as bubbles intensively present in the lower receptacle (7) at this stage might cause intermittent water transfer. Therefore, the control unit (24) provides that boiled water is transferred within a certain predetermined amount of time such as up to 60 seconds.

The fact that the electronic control unit (24) along with the steam sensor (21), are embedded within the lower receptacle (7) handle (31) is advantageous in that said components which are sensitive to heat operate in a more reliable environment. The steam sensor (21) in the form of a NTC thermistor instead of a mechanic element responsive to heat energy is also advantageous due to its compact size and direct applicability into said electronic control unit (24). The machine may conventionally comprise a user informative screen (19) and a control panel (20). Further, said valve body (18) has a cover (32) and said pump (27) has a suction filter (30).

Besides, the tea machine of the present invention may also fulfill "keep warm" function subsequent to transfer of boiled water. To this end, regular control of said steam sensor (21) data by said control unit (24) may conventionally be used to adjust power transmitted to the electrical heating resistance (6) and the water remaining in the lower receptacle and the drinkable substance in brewing process in the upper receptacle (11) in thermal communication with said lower receptacle (7) can be kept warm. It is to be noted that power transfer to the heater element (6) is terminated upon boiling and it is not powered until water transfer is terminated. Thereupon, "keep warm" function is activated by powering said heater element (6) at a lower power rating with regard to the active power dissipated for effecting boiling.

## Claims

1. An electrical household appliance comprising a first receptacle (7) for boiling water and a second receptacle (11) in thermal communication with said first receptacle (7) and in which plant leaves are placed in heated water for brewing, said second receptacle (11) also being suitable for placing on top of said first receptacle (7) such that the base of said second receptacle (11) cover the upper open end of said first receptacle (7), said first receptacle comprising a water transfer means (27) and an electrical heating means (6) whereby said first receptacle (7) further comprises,
a bidirectional valve (18) selectively establishing fluid communication with said second receptacle (11) in response to presence of a pusher mechanism (33) of said second receptacle (11) in engaging relationship with said bidirectional valve (18),
a boiler evacuation conduit (25) selectively in fluid communication with said second receptacle (11) and said first receptacle (7) and,
an electronic control unit (24) in electrical communication with said water transfer means (27) and said electrical heating means (6) **characterized in that** said first receptacle (7) comprises a means for detecting (23) compliance of the position of said second receptacle (11) in respect of a predefined position thereof on said first receptacle whereby the electronic control unit (24) is in electrical communication with said means for detecting (23) compliance of the position of said second receptacle (11) and effects transfer of boiled water within a predefined time duration upon boiling by not immediately initiating pump means (27).

2. An electrical household appliance as set forth in Claim 1 wherein said pusher mechanism (33) advances a movable valve extension (9) against a valve extension spring (28) in said valve body (18).

3. An electrical household appliance as set forth in Claim 1 or 2 wherein said bidirectional valve (18) conveys boiled water back to said first receptacle (7) in response to the absence of said pusher mechanism (33) of said second receptacle (11).

4. An electrical household appliance as set forth in Claim 1 or 3 wherein said electronic control unit (24) is in electrical communication with a steam sensor (21).

5. An electrical household appliance as set forth in Claim 4 wherein said steam sensor (21) is directly embedded within said electronic control unit (24).

6. An electrical household appliance as set forth in Claim 1 or 5 wherein said electronic control unit (24) is embedded within handle (31) of said lower receptacle (7).

7. An electrical household appliance as set forth in Claim 1 wherein said electronic control unit (24) effects transfer of boiled water within 60 seconds upon boiling.

8. An electrical household appliance as set forth in any previous Claims wherein said electrical resistance's (6) active power dissipation is terminated by said electronic control unit (24) upon boiling.

9. An electrical household appliance as set forth in any previous Claims wherein said electrical resistance (6) is powered again upon termination of transfer of boiled water at a power rating lower with regard to the active power dissipated by said electrical resistance (6) for effecting boiling.

## Patentansprüche

1. Elektrisches Haushaltsgerät mit einem ersten Behälter (7) zum Aufkochen von Wasser und einem zweiten Behälter (11), der sich in thermischer Verbindung mit dem ersten Behälter (7) befindet und in den Pflanzenblätter in erhitztes Wasser zum Aufbrühen gegeben werden, wobei der zweite Behälter (11) auch dazu geeignet ist, auf dem ersten Behälter (7) platziert zu werden, so dass der Boden des zweiten Behälters (11) das obere, offene Ende des ersten Behälters (7) bedeckt, wobei der erste Behälter eine Wasserüberführungseinrichtung (27) und eine elektrische Heizeinrichtung (6) aufweist, und wobei der erste Behälter (7) ferner aufweist
ein bidirektionales Ventil (18), das selektiv eine Fluidverbindung mit dem zweiten Behälter (11) herstellt in Reaktion auf die Gegenwart eines sich in Eingriff mit dem bidirektionalen Ventil (18) befindenden Stößelmechanismus (33) des zweiten Behälters (11),
eine Boilerentleerungsleitung (25), die wahlweise in Fluidverbindung mit dem zweiten Behälter (10) und dem ersten Behälter (7) steht, und
eine elektronische Steuereinheit (24) in elektrischer Verbindung mit der Wasserüberführungseinrichtung (27) und der elektrischen Heizeinrichtung (6),
**dadurch gekennzeichnet, dass** der erste Behälter (7) eine Einrichtung (23) zum Erfassen einer Übereinstimmung der Stellung des zweiten Behälters (11) bezüglich einer vorbestimmten Stellung desselben auf dem ersten Behälter aufweist, wodurch die elektronische Steuereinheit (24) in elektrischer Verbindung mit der Einrichtung (23) zum Erfassen einer Übereinstimmung der Stellung des zweiten Behälters (11) steht und eine Überführung aufgekochten Wassers innerhalb einer vorbestimmten Zeitdauer nach einem Aufkochen durch ein nicht sofortiges Betätigen einer Pumpvorrichtung (27) bewirkt.

2. Elektrisches Haushaltsgerät nach Anspruch 1, bei dem der Stößelmechanismus (33) eine bewegliche Ventilverlängerung (9) gegen eine Ventilzugfeder (28) in dem Ventilgehäuse (18) vorbewegt.

3. Elektrisches Haushaltsgerät nach Anspruch 1 oder 2, bei dem das bidirektionale Ventil (18) in Reaktion auf die Abwesenheit des Stößelmechanismus (33) des zweiten Behälters (11) erhitztes Wasser zurück zum ersten Behälter (7) leitet.

4. Elektrisches Haushaltsgerät nach Anspruch 1 oder 3, bei dem die elektronische Steuereinheit (24) in elektrischer Verbindung mit einem Dampfsensor (21) steht.

5. Elektrisches Haushaltsgerät nach Anspruch 4, bei dem der Dampfsensor (21) unmittelbar in die elektronische Steuereinheit (24) eingebettet ist.

6. Elektrisches Haushaltsgerät nach Anspruch 1 oder 5, bei dem die elektronische Steuereinheit (24) in einen Handgriff (31) des unteren Behälters (7) eingebaut ist.

7. Elektrisches Haushaltsgerät nach Anspruch 1, bei dem die elektronische Steuereinheit (24) eine Überführung aufgekochten Wassers innerhalb von 60 Sekunden nach einem Aufkochen bewirkt.

8. Elektrisches Haushaltsgerät nach einem der vorhergehenden Ansprüche, bei dem die Wirkleistungsabgabe eines elektrischen Widerstands (6) von der elektronischen Steuereinheit (24) bei Aufkochen beendet wird.

9. Elektrisches Haushaltsgerät nach einem der vorhergehenden Ansprüche, bei dem der elektrische Widerstand (6) nach einer Beendigung einer Überführung aufgekochten Wassers wieder bestromt wird mit einer Leistung, die niedriger ist als die von dem elektrischen Widerstand (6) zum Bewirken eines Aufkochens abgegebene Wirkleistung.

## Revendications

1. Appareil ménager électrique comprenant un premier réceptacle (7) pour faire bouillir de l'eau et un second réceptacle (11) en communication thermique avec ledit premier réceptacle (7) et dans lequel des feuilles de plante sont placées dans l'eau chauffée pour être brassées, ledit second réceptacle (11) étant également adapté pour se placer au-dessus dudit premier réceptacle (7) de telle manière que la base dudit second réceptacle (11) couvre l'extrémité supérieure ouverture dudit premier réceptacle (7), ledit premier réceptacle comprenant un moyen de transfert d'eau (27) et un moyen de chauffage électrique (6), dans lequel ledit premier réceptacle (7) comprend en plus
une vanne bidirectionnelle (18) établissant de manière sélective une communication fluidique avec ledit second réceptacle (11) en réponse à la présence d'un mécanisme poussoir (33) dudit second réceptacle (11) en interaction avec ladite vanne bidirectionnelle (18),
une conduite d'évacuation (25) sélectivement en communication fluidique avec ledit second réceptacle (11) et ledit premier réceptacle (7) et,
un module de contrôle électronique (24) en communication électrique avec ledit moyen de transfert d'eau (27) et ledit moyen de chauffage électrique (6),
**caractérisé en ce que** ledit premier réceptacle (7) comprend un moyen de détection (23) de l'adéquation de la position dudit second réceptacle (11) par rapport à une position prédéfinie sur ledit premier réceptacle, le module de contrôle électronique (24) étant en communication électrique avec ledit moyen de détection (23) de l'adéquation de la position dudit second réceptacle (11) et effectuant le transfert de l'eau bouillie dans une période prédéfinie à partir de l'ébullition en n'activant pas immédiatement le moyen de pompage (27).

2. Appareil ménager électrique tel que défini dans la revendication 1, dans lequel ledit mécanisme poussoir (33) amène une extension de vanne mobile (9) contre un ressort d'extension de vanne (28) dans le corps de ladite vanne (18).

3. Appareil ménager électrique tel que défini dans la revendication 1 ou 2, dans lequel ladite vanne bidirectionnelle (18) ramène l'eau bouillie dans ledit premier réceptacle (7) en réponse à l'absence dudit mécanisme poussoir (33) dudit second réceptacle (11).

4. Appareil ménager électrique tel que défini dans la revendication 1 ou 3, dans lequel ledit module de contrôle électronique (24) est en communication électrique avec un détecteur de vapeur d'eau (21).

5. Appareil ménager électrique tel que défini dans la revendication 4, dans lequel ledit détecteur de vapeur d'eau (21) est directement incorporé audit module de contrôle électronique (24).

6. Appareil ménager électrique tel que défini dans la revendication 1 ou 5, dans lequel ledit module de contrôle électronique (24) est incorporé dans la poignée (31) dudit réceptacle inférieur (7).

7. Appareil ménager électrique tel que défini dans la revendication 1, dans lequel ledit module de contrôle électronique (24) effectue le transfert de l'eau bouillie dans les 60 secondes à partir de l'ébullition.

8. Appareil ménager électrique tel que défini dans l'une ou l'autre des revendications précédentes, dans lequel la dissipation de l'énergie active de ladite résistance électrique (6) est arrêtée par ledit module de contrôle électronique (24) à partir de l'ébullition.

9. Appareil ménager électrique tel que défini dans l'une ou l'autre des revendications précédentes, dans lequel ladite résistance électrique (6) est à nouveau alimentée après l'arrêt du transfert de l'eau bouillie, à une valeur inférieure par rapport à l'énergie active dissipée par ladite résistance électrique (6) pour produire l'ébullition.
